# EUROPÄISCHE PATENTSCHRIFT

(11) **EP 0 890 802 B1**
(45) Veröffentlichungstag und Bekanntmachung des Hinweises auf die Patenterteilung: **26.03.2003**
(21) Anmeldenummer: 98109946.8
(22) Anmeldetag: 30.05.1998
(51) Int. Cl.: F24F 12/00

(54) **Be- und Entlüftungsanlage mit regenerativer Wärmerückgewinnung**
Exhaust and ventilation device with regenerative heat recovery
Dispositif d'amenée et d'évacuation d'air avec récupération de chaleur régénérable

(30) Priorität: 12.07.1997 DE 19730019
(43) Veröffentlichungstag der Anmeldung: 13.01.1999
(73) Patentinhaber: Diels, Manfred, 58540 Meinerzhagen (DE)
(72) Erfinder: Diels, Hans-Christian, 51469 Bergisch Gladbach (DE)
(74) Vertreter: Schröter & Haverkamp

(56) Entgegenhaltungen:
- DE-C- 4 134 429
- DE-U- 7 709 149
- US-A- 4 688 626
- US-A- 5 230 719

## Beschreibung

Die Erfindung betrifft eine Be- und Entlüftungsanlage mit regenerativer Wärmerückgewinnung, umfassend ein längliches, innere und äußere Beund Entlüftungsöffnungen aufweisendes Gehäuse, in dem wechselweise angetriebene Ventilatoreinheiten zum Fördern von im wesentlichen axial das Gehäuse in jeweils entgegengesetzten Richtungen unter Benutzung desselben Strömungsweges durchströmenden Luftströmen und eine von den erzeugten Luftströmen durchströmte Wärmespeichereinheit zum Aufnehmen und Zwischenspeichem der Wärme des die Wärmespeichereinheit in einer Richtung durchströmenden Luftstromes und zum Abgeben derselben auf den die Wärmespeichereinheit in entgegengesetzter Richtung durchströmenden Luftstrom angeordnet sind.

Eine solche Be- und Entlüftungsanlage ist aus der DE-GM 77 09 149.7 bekannt. Derartige Be- und Entlüftungsanlagen werden zum Be- und Entlüften von Räumen verwendet, um insbesondere in kalten Jahreszeiten bei einem Raumluftaustausch die in einem solchen Raum befindliche Wärme weitestgehend im Raum zu belassen und diese nicht unnötig nach außen abzugeben. Entsprechend umgekehrt arbeitet eine solche Anlage bei klimatisierten Räumen in heißen Jahreszeiten.

Die in dem genannten Dokument beschriebene Be- und Entlüftungsanlage besteht aus einem länglichen Gehäuse, in dem eine Wärmespeichereinheit angeordnet ist. An jedem ein- bzw. ausströmseitigen Ende der Wärmespeichereinheit ist jeweils ein Axialventilator angeordnet, dessen Förderrichtung zur Wärmespeichereinheit hin gerichtet ist. Das eine Ende des Gehäuses der Be- und Entlüftungsanlage mündet in einen Raum; das andere Ende steht mit der Außenluft in Verbindung. Im Winter erfolgt eine Raumbeund Entlüftung dergestalt, daß der innere Axialventilator zunächst angetrieben wird und einen Entlüftungsluftstrom aus dem Raum durch die Wärmespeichereinheit hindurch nach draußen fördert. Die in dem Entlüftungsluftstrom enthaltene Wärme wird an die Wärmespeichereinheit abgegeben. Nach einem vorbestimmten Zeitintervall wird dieser Axialventilator ausgeschaltet und der andere Axialventilator zum Fördern des Belüftungsluftstrom angetrieben. Die eintretende kühlere Frischluft wird dann beim Durchströmen der Wärmespeichereinheit erwärmt und tritt somit erwärmt in das Rauminnere ein.

Derartige Be- und Entlüftungsanlagen können jedoch nicht dort eingesetzt werden, wo nur geringer Raum für eine Installation, welches auch eine relativ dichte Anordnung der einzelnen einer Wärmespeichereinheit zugeordneten Wärmespeicherelemente bedingt, einer solchen Anlage zur Verfügung steht. Zur Erzielung einer ausreichenden Durchströmungs-geschwindigkeit des Be- und Entlüftungsluftstromes durch die einzelnen, In der Wärmespeichereinheit vorgesehenen Strömungskanäle wird eine ausreichende Luftmenge und ein entsprechender Druck benötigt, was mit Axialventilatoren in solchen kompakten Be- und Entlüftungsanlagen nicht erreichbar ist.

Aus der DE 30 06 318 C2 ist eine weitere Be- und Entlüftungsanlage bekannt, die jedoch im Unterschied zur Be- und Entlüftungsanlage gemäß der DE-GM 77 09 149.7 nicht nach dem Prinzip der regenerativen Wärmerückgewinnung sondern nach dem Prinzip der rekuperativen Wärmerückgewinnung arbeitet. Die Funktionsweise einer solchen Anlage besteht in einer Bereitstellung von zwei gleichzeitig und voneinander getrennt geförderten Luftströmen, die durch ein oder mehrere Wärmetauscherelemente geleitet werden, damit die im Entlüftungsluftstrom enthaltene Wärme auf den Belüftungsluftstrom übertragen wird. Zum Fördern der beiden Luftströme sind handelsübliche Radialventilatoren eingesetzt. Aufgrund des Vorsehens zweier sich kreuzender Strömungskanäle und der notwendigerweise parallel zueinander anzuordnenden Radialventilatoren benötigt eine solche Be- und Entlüftungsanlage mehr Breite bzw. Einbautiefe bei gleicher Leistung bzw. bei gleichem Wirkungsgrad. Daher ist eine nach dem Prinzip der rekuperativen Wärmerückgewinnung arbeitende Anlage nicht optimal für einen Einsatz in sehr kompakt ausgelegten Anlagen geeignet. Es ist erwiesen, daß die nach dem regenerativen Prinzip der Wämerückgewinnung arbeitenden Be- und Entlüftungsanlagen sich nicht nur durch einen besseren Wirkungsgrad auszeichnen, sondern daß bei diesen Anlagen auch eine Schwitzwasserbildung verhindert ist.

Aus der DE 41 34 429 C1 ist ein Kühlgerät für Elektronikschränke in einer besonders flachen Ausgestaltung bekannt. Dieses Gerät arbeitet nach dem Prinzip eines Zwei-Kreis-Kühlsystems, bei dem die abzuführende Wärme des einen Luftstromes über einen Wärmetauscher auf einen kühleren Luftstrom übertragen wird. Der zu kühlende Luftstrom wird gemäß dem Zwei-Kreis-Prinzip aus dem Elektronikschrank abgesaugt und nach seiner Kühlung wiederum in den Elektronikschrank eingeblasen. Der die Wärme abführende Luftstrom wird von der Umgebung angesaugt und nach seinem Erwärmen wieder an die Umgebung abgegeben. Zum fördern der Luftströme sind Radialventilatoren eingesetzt, die gleichzeitig betrieben die Luftströme in den jeweiligen, voneinander getrennten Strömungskanälen in entgegengesetzte Richtungen fördern. Für einen Einsatz als Be- und Entlüftungsanlage zum Be- und Entlüften von Räumen ist diese Vorrichtung jedoch nicht geeignet.

Ausgehend von diesem diskutieren Stand der Technik liegt der Erfindung daher die Aufgabe zugrunde, eine Be- und Entlüftungsanlage, die nach dem Prinzip der regenerativen Wärmerückgewinnung arbeitet, vorzuschlagen, die sich insbesondere zu einem Einsatz in schmaldimensionierten Kompaktanlagen eignet.

Diese Aufgabe wird erfindungsgemäß dadurch gelöst, daß jede Ventilatoreinheit aus einem Radialventilatorrad und einem die Förderluft auf die Wärmespeichereinheit richtenden Fördergehäuse mit einem Austrittstutzen besteht, bei welcher Ventilatoreinheit der radiale Abstand des Radialventilatorrades zu seinem Fördergehäuse und die Öffnungsweite des Ausstrittsstutzens dergestalt konzipiert sind, daß jede Ventilatoreinheit im nicht angetriebenen Zustand von dem von der anderen Ventilatoreinheit geförderten Luftstrom durchströmbar ist, so daß der Strömungsweg der Förderluft in seinen beiden Richtungen durch die Ventilatoreinheiten hindurch erfolgt, indem die Förderluft beim Betrieb der einen Ventilatoreinheit durch diese aktiv gefördert und diese Ventilatoreinheit beim Betrieb der anderen Ventilatoreinheit von der in umgekehrter Richtung geförderten Luft durchströmt wird.

Der Einsatz von Radialventilatoren als Ventilatoreinheiten mit jeweils einem Radialventilatorrad, welches in einem vorbestimmten, ausreichend großen radialen Abstand zu dem ihm zugeordneten Fördergehäuse angeordnet ist, trägt Sorge dafür, daß eine solche Ventilatoreinheit beim Betrieb nicht nur einen gegenüber Axialventilatoren größeren Förderdruck aufzubauen vermag, sondern daß diese Ventilatoreinheit von dem von der anderen Ventilatoreinheit erzeugten Luftstrom entgegen der eigenen Förderrichtung durchströmt werden kann, ohne daß diese Ventilatoreinheit ein wesentliches Strömungshindernis darstellt Entsprechend ist auch der Austrittsstutzen einer jeden Ventilatoreinheit konzipiert. Versuche haben ergeben, daß bei einem geeigneten radialen Abstand zwischen dem Radialventilatorrad und dem Fördergehäuse, der zweckmäßigerweise zwischen dem 0,2-fachen bis 0,5-fachen des Durchmessers des Radialventilatorrades beträgt, das Ventilatorrad sich beim passiven Durchströmtwerden kaum ein Strömungshindernis darstellt. Mit einer solchen Ausgestaltung der zum Fördem der Luftströme vorgesehenen Ventilatoreinheiten ist es erstmals möglich geworden die positiven Eigenschaften eines Radialventilators (hohe Förderleistung, größerer Druckaufbau) mit denjenigen eines Axialventilators (ungehindertes Durchströmtwerden in beiden Richtungen) zu vereinen. Dies ermöglicht eine sehr kompakte Bauweise von Be- und Entlüftungsanlagen.

In einem Ausführungsbeispiel ist vorgesehen, daß jeweils eine Ventilatoreinheit an jedem ein- bzw. ausströmseitigen Ende der Wärmespeichereinheit angeordnet ist.

In einem weiteren Ausführungsbeispiel ist vorgesehen, daß die Ventilatoreinheiten benachbart zueinander am ein- bzw. ausströmseitigen Ende der Wärmespeichereinheit angeordnet sind. Durch eine solche Ausgestaltung können die einzelnen Elemente der Be- und Entlüftungsanlage modulweise in einem Gehäuse integriert sein. Bei dieser benachbarten Anordnung der Ventilatoreinheiten ist es zweckmäßig, daß die Ventilatoreinheiten mit ihren Austrittsstutzen aneinander grenzend bzw. in einem gemeinsamen Fördergehäuse angeordnet sind.

Sind die Ventilatoreinheiten an jeweils einem Ende der Wärmespeichereinheit vorgesehen, kann es zweckmäßig sein, daß die Ventilatoreinheiten jeweils im Bereich der Endabschnitte des Gehäuses der Be- und Entlüftungsanlage angeordnet sind, so daß diese Gehäuseabschnitte gleichzeitig das Fördergehäuse darstellen. In einer solchen Ausgestaltung kann die Tiefe einer solchen Anlage im wesentlichen der Breite eines Radialventilatorrades entsprechen, so daß eine solche Ausgestaltung insbesondere für extrem kompakte Anlagen von Vorteil ist. Vorteilhaft ist ferner, daß kein eigenes Fördergehäuse vorgesehen ist, so daß entsprechend die Herstellungskosten einer solchen Be- und Entlüftungsanlage reduziert sind.

Für den Fall, daß die Breite eines Radialventilatorrades geringer als die Tiefe des Gehäuses ist, kann ein eigenes Fördergehäuse vorgesehen sein, welches in Richtung der Wärmespeichereinheit einen sich trichterförmig erweiternden Austrittsstutzen aufweist. Dadurch ist sichergestellt, daß die gesamte Förderluft der im Betrieb befindlichen anderen Ventilatoreinheit in diese Ventilatoreinheit eingeleitet wird, diese durchströmt und die Be- und Entlüftungsanlage durch die Ansaugöffnung dieser Ventilatoreinheit wieder verläßt

Untersuchungen haben ergeben, daß es zweckmäßig ist, den radialen Abstand zwischen einem Radialventilatorrad und dem diesen zugeordneten Fördergehäuse so zu bemessen, daß der Abstand etwa dem 0,2-fachen bis 0,5-fachen des Durchmessers des Radialventilatorrades entspricht Mit einem solchen Abstand ist zwar der mögliche Druckaufbau gegenüber einem Radialventilator mit einem "eng" anliegendem Fördergehäuse herkömmlicher Bauart verringert, jedoch immer noch erheblich höher als mit einem Axialventilator möglich. Entsprechendes gilt für die Förderleistung. Gleichzeitig ist bei einem solchen Abstand der Strömungsquerschnitt beim passiven Durchströmtwerden nicht soweit reduziert, daß dieses zu unnötigen Leistungsverlusten der Be- und Entlüftungsanlage führt.

Weitere Ausgestaltungen und Vorteile sind Bestandteile weiterer Unteransprüche sowie der nachfolgende Beschreibung eines bevorzugten Ausführungsbeispieles. Es zeigen:
- **Fig. 1**: Eine schematisierte, zum Teil geschnittene Draufsicht in eine geöffnete Be- und Entlüftungsanlage gemäß einem ersten Ausführungsbeispiel,
- **Fig. 2**: einen Schnitt entlang der Linie A - B der Figur 1 im Bereich einer Ventilatoreinheit,
- **Fig. 3**: eine schematisierte zum Teil geschnittene Draufsicht auf eine weitere Be- und Entlüftungsanlage und
- **Fig. 4**: eine schematisierte, zum Teil geschnittene Draufsicht in eine geöffnete Be- und Entlüftungsanlage gemäß einem weiteren Ausführungsbeispiel.

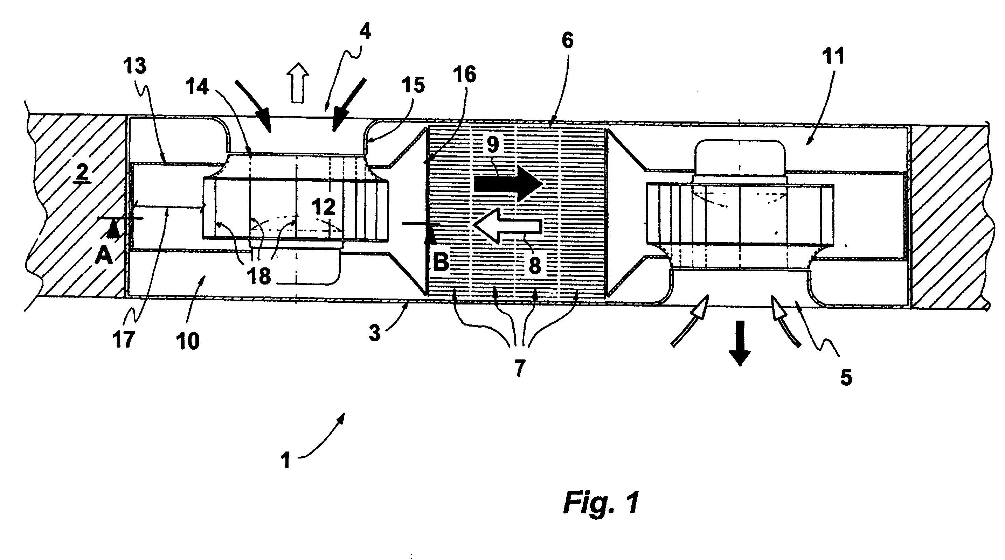

Figur 1 zeigt eine Be- und Entlüftungsanlage 1. Die Be- und Entlüftungsanlage 1 ist in die Außenmauer 2 eines Raumes eingesetzt Die Be- und Entlüftungsanlage 1 umfaßt ein längliches, im Querschnitt rechteckiges Gehäuse 3, in welches eine äußere Be- und Entlüftungsöffnung 4 und eine innere Be- und Entlüftungsöffnung 5 eingebracht sind. Die innere Be- und Entlüftungsöffnung 5 mündet in das Rauminnere; die äußere Be- und Entlüftungsöffnung 4 mündet nach draußen.

In dem Gehäuse 3 ist etwa mittig eine Wärmespeichereinheit 6 angeordnet, die ihrerseits aus mehreren aus einzelnen Wärmespeicherplatten gebildeten Wärmespeicherpaketen 7 besteht. Die Wärmespeichereinheit 6 ist in Längsrichtung der Be- und Entlüftungsanlage 1 gemäß den Pfeilen 8, 9 durchströmbar. Es ist daher möglich, zwischen der inneren Be- und Entlüftungsöffnung 5 und der äußeren Be- und Entlüftungsöffnung 4 einen die Wärmespeichereinheit 6 durchströmenden Luftstrom zu erzeugen und umgekehrt. Zu diesem Zweck sind beiderseits der Wärmespeichereinheit 6 jeweils eine Ventilatoreinheit 10, 11 angeordnet.

Im Folgenden ist allein die Ventilatoreinheit 10 näher erläutert; die Ventilatoreinheit 11 ist entsprechend aufgebaut. Die Ventilatoreinheit 10 umfaßt ein elektromotorisch angetriebenes Radialventilatorrad 12 und ein Fördergehäuse 13. Das Radialventilatorrad 12 grenzt mit seiner Ansaugöffnung 14 an die äußere Be- und Entlüftungsöffnung 4. Dabei ist vorgesehen, daß die Be- und Entlüftungsöffnung 4 einen Verbindungsstutzen 15 aufweist, damit die Ansaugöffnung 14 des Radialventilatorrades 12 unmittelbar an die Beund Entlüftungsöffnung 4 grenzt. Ein geringer Spalt zwischen dem Radialventilatorrad 12 und dem Verbindungsstutzen 15 ist notwendig, damit sich das Radialventilatorrad 12 ungehindert drehen kann.

Das Fördergehäuse 13 umgibt das Radialventilatorrad 12 und weist an seiner zur Wärmespeichereinheit 6 weisenden Öffnungsseite einen trichterförmig ausgebildeten Austrittsstutzen 16 auf. Die Öffnungsweite des Austrittsstutzens 16 entspricht im wesentlichen der Breite der Wärmespeichereinheit 6 und somit der lichten Tiefe des Gehäuses 3; die Höhe des Austrittsstutzens entspricht im wesentlichen der Höhe der Wärmespeichereinheit und somit der lichten Höhe des Gehäuses 3. Der Austrittsstutzen 16 grenzt mit geringem Abstand an die Wärmespeichereinheit 6 und bedeckt durch seine Konfigurierung im wesentlichen dessen gesamte ein- bzw. ausströmseitige Stirnfläche. Das Fördergehäuse 13 weist bezüglich des Radialventilatorrades 12 einen gewissen radialen Abstand 17 auf. Der Abstand entspricht bei dem Figur 1 dargestellten Ausführungsbeispiel dem 0,4-fachen des Durchmessers des Radialventilatorrades 12. Femer ist vorgesehen, daß die einzelnen Schaufeln 18 einen bestimmten Abstand voneinander aufweisen. Die Konfigurierung der Schaufeln 18 sowie der eingehaltene radiale Abstand 17 zwischen dem Radialventilatorrad 12 und dem Fördergehäuse 13 dient zum Durchlassen eines Luftstromes gemäß dem Pfeil 8 beim Betrieb der Ventilatoreinheit 11 und somit beim motorischen Stillstand der Ventilatoreinheit 10. Das Radialventilatorrad 12 samt Fördergehäuse 13 stellt in dieser Ausbildung nur ein unwesentliches Strömungshindemis für den die Ventilatoreinheit 10 durchströmenden Luftstrom dar.

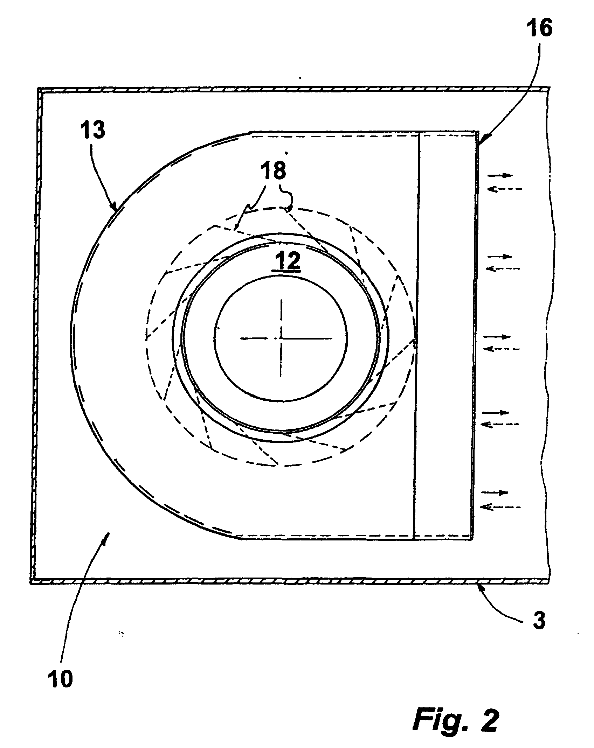

Wie aus Figur 2 ersichtlich ist die rückwärtige Seite des Fördergehäuses 13 halbkreisförmig ausgebildet, so daß das Radialventilatorrad 12 in diesem Bereich jeweils einen gleichbleibenden Abstand zu dem Fördergehäuse 13 aufweist. Ferner ist aus dieser Darstellung sowohl der relativ große Abstand der Schaufeln 18 zueinander sowie die Höhe des Austrittsstutzens 16 erkennbar, der im wesentlichen der Höhe des Gehäuses 3 entspricht.

Beim Betrieb der Be- und Entlüftungsanlage 1 ist die Ventilatoreinheit 10 zum Fördern des Belüftungsluftstromes und die Ventilatoreinheit 11 zum Fördern des Entlüftungsluftstromes vorgesehen. Die Ventilatoreinheiten 10, 11 sind zu diesem Zweck wechselweise angetrieben. Im Entlüftungsbetrieb der Be- und Entlüftungsanlage 1 ist die Ventilatoreinheit 11 in Betrieb und fördert den Entlüftungsluftstrom - durch die Pfeile 8 angedeutet -, der durch die innere Be- und Entlüftungsöffnung 5 in die Ansaugöffnung des der Ventilatoreinheit 11 zugeordneten Radialventilatorrades eintritt und durch diese zum Beaufschlagen der Wärmespeichereinheit 6 gefördert wird. Nach Durchströmen der Wärmeeinheit 6, die eine in Bezug auf die Rauminnentemperatur geringere Temperatur aufweist wird dem Entlüftungsluftstrom 8 Wärme entzogen. Der Entlüftungsluftstrom tritt nach Durchströmen der Wärmeeinheit 6 in den Austrittsstutzen 16 der Ventilatoreinheit 10 ein, durchströmt dieselbe und tritt durch die Be- und Entlüftungsöffnung 4 ungehindert nach außen aus. Bei einem solchen Betrieb befindet sich die Ventilatoreinheit 10 in Ruhestellung, so daß diese nur passiv von dem Entlüftungsluftstrom durchströmt wird. Nach einem Umschalten der Be- und Entlüftungsanlage 1 von ihrem Entlüftungsbetrieb auf ihren Belüftungsbetrieb wird die Ventilatoreinheit 11 abgeschaltet und die Ventilatoreinheit 10 angeschaltet. Das Gehäuse 3 der Be- und Entlüftungsanlage 1 wird nunmehr von dem Belüftungsluftstrom - durch die Pfeile 9 angedeutet - in umgekehrter Richtung durchströmt. Der von außen eintretende und somit relativ kühle Belüftungsluftstrom nimmt die in der Wärmespeichereinheit 6 gespeicherte Wärme auf und tritt anschließend erwärmt aus der Be- und Entlüftungsöffnung 5 in das Rauminnere ein.

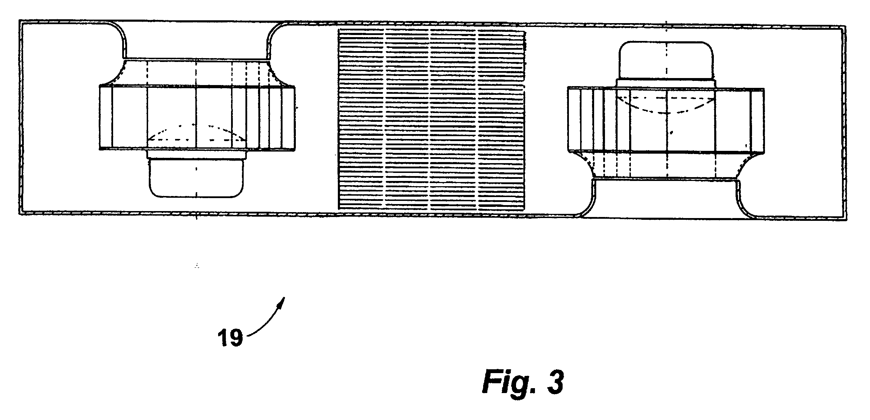

In Figur 3 ist eine weitere, vereinfachte Be- und Entlüftungsanlage 19 abgebildet. Die Be- und Entlüftungsanlage 19 ist entsprechend der Be- und Entlüftungsanlage 1 aufgebaut, weist jedoch kein eigenes Fördergehäuse auf. In diesem Ausführungsbeispiel bilden die jeweiligen Endabschnitte des Gehäuses 3 das Fördergehäuse.

Die in den Figuren 1 und 3 in dem Gehäuse 3 enthaltenen Einheiten-Wärmespeichereinheit 6 sowie Ventilatoreinheiten 10, 11- sind zweckmässiger Weise als Module hergestellt, die sich an Führungsschienen abstützen. Die einzelnen Einheiten 6, 10, 11 können zur Dämpfung von auftretenden Vibrationen durch Moosgummieinsätze voneinander sein. Die innere Be- und Entlüftungsöffnung 5 ist so ausgestaltet, daß diese durch ein von innen abnehmbares Gitter gebildet wird. Nach dessen Entfernen ist die Ventilatoreinheit 11 aus dem Gehäuse 3 herausnehmbar. Anschließend ist die Wärmespeichereinheit 6 und danach die Ventilatoreinheit 10 aus dem Gehäuse 3 herausziehbar. Eine solche Ausgestaltung hat zum Vorteil, daß mit einer gering dimensionierten Öffnung - Gitter im Bereich der inneren Beund Entlüftungsöffnung 5 - auf die einzelnen verwendeten Module zugegriffen werden kann, ohne daß die Be- und Entlüftungsanlage über ihre gesamte Länge hinweg geöffnet werden muß. Insbesondere bei anfallenden Reparaturen oder bei einem Austausch einzelner Module ist ein solches Bestückungssystem vorteilhaft.

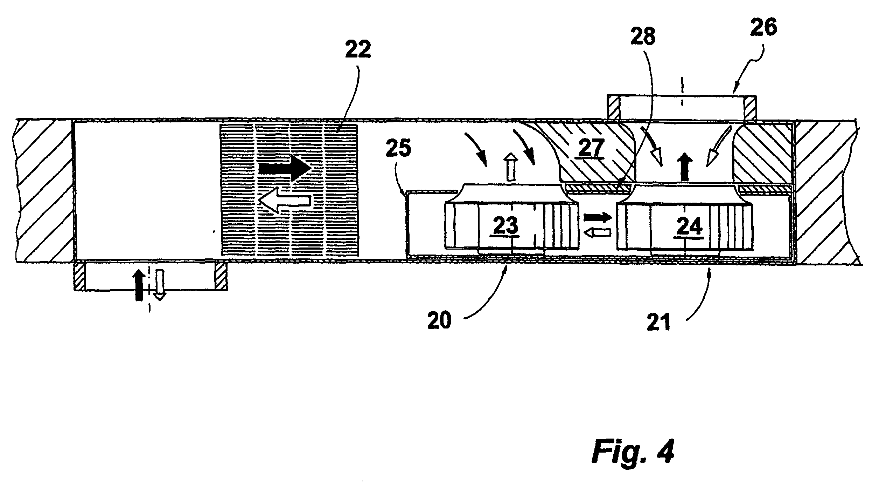

In einem weiteren, in Figur 4 dargestellten Ausführungsbeispiel, sind die beiden Ventilatoreinheiten 20, 21 benachbart und mit ihren Austrittsstutzen aneinandergrenzend zu einer Seite der Wärmespeichereinheit 22 angeordnet. Durch die aneinandergrenzenden Austrittsstutzen, die in dem dargestellten Ausführungsbeispiel durch ein den beiden Radialventilatorrädem 23, 24 gemeinsames Fördergehäuse 25 gebildet sind, durchströmt der von einer Ventilatoreinheit 20 bzw. 21 geförderte Luftstrom die andere Ventilatoreinheit 21 bzw. 20, bevor dieser Luftstrom entweder die Wärmespeichereinheit 22 durchströmt oder durch die äußere Be- und Entlüftungsöffnung 26 austritt. In dem dargestellten Ausführungsbeispiel befindet sich die Ansaugöffnung der äußeren Ventilatoreinheit 21 im Bereich der äußeren Be- und Entlüftungsöffnung 26 des Gehäuses. Bei einer solchen Konfiguration ist die Geräuschbelastung durch den Betrieb der Be- und Entlüftungsanlage auf ein Minimum im Rauminneren reduziert. Die Ansaugöffnungen der beiden Ventilatoreinheiten 20, 21 sind durch eine Gehäusewand 27 und durch eine auf das Fördergehäuse 25 aufgesetzte Platte 28 voneinander getrennt, wobei die Ansaugöffnung der äußeren Ventilatoreinheit 21 sich, wie oben beschrieben, im Bereich der Be- und Entlüftungsöffnung 26 des Gehäuses befindet und somit die andere Ansaugöffnung innerhalb des Gehäuses angeordnet ist. Durch diese Kammerung ist der Strömungsweg der Luftströme eindeutig bestimmt, so daß ein Luftstrom nur durch die beiden Ventilatoreinheiten 20, 21 hindurch gefördert werden kann, wie dies für den Entlüftungsluftstrom durch die gefüllten Pfeile und für den Belüftungsluftstrom durch die nur im Umriß dargestellten Pfeile symbolisiert ist

Eine Umschaltung des Betriebes der beschriebenen Be- und Entlüftungsanlagen von einem Entlüftungsbetrieb auf einen Belüftungsbetrieb und umgekehrt kann gemäß einem vorgegebenen Zeittakt erfolgen. Es kann jedoch auch vorgesehen sein, daß Wärmemeßsensoren an die Wärmespeichereinheit angeschlossen sind, die die jeweilige Temperatur der Wärmespeichereinheit erfassen und an eine Steuereinheit weitergeben. In Abhängigkeit von der Temperatur der Wärmespeichereinheit erfolgt dann eine Umschaltung vom Entlüftungsbetrieb auf den Belüftungsbetrieb, wobei diese Temperatur so vorgewählt ist, daß im Entlüftungsbetrieb noch eine ausreichende Wärmeabgabe an die Wärmespeichereinheit möglich ist. Umgekehrt erfolgt eine Umschaltung vom Belüftungsbetrieb auf den Entlüftungsbetrieb, wenn die Wärmespeichereinheit einen Großteil ihrer gespeicherten Wärme an den Belüftungsluftstrom abgegeben hat, so daß eine weitere Erwärmung des Belüftungsluftstromes nicht mehr oder nur noch untergeordnet stattfindet.

### Zusammenstellung der Bezugszeichen

- 1: Be- und Entlüftungsanlage
- 2: Außenmauer
- 3: Gehäuse
- 4: Äußere Be- und Entlüftungsöffnung
- 5: Innere Be- und Entlüftungsöffnung
- 6: Wärmespeichereinheit
- 7: Wärmespeicherpaket
- 8: Pfeil
- 9: Pfeil
- 10: Ventilatoreinheit
- 11: Ventilatoreinheit
- 12: Radialventilatorrad
- 13: Fördergehäuse
- 14: Ansaugöffnung
- 15: Verbindungsstutzen
- 16: Austrittsstutzen
- 17: Abstand
- 18: Schaufel
- 19: Be- und Entlüftungsanlage
- 20: Ventilatoreinheit
- 21: Ventilatoreinheit
- 22: Wärmspeichereinheit
- 23: Radialventilatorrad
- 24: Radialventilatorrad
- 25: Fördergehäuse
- 26: Äußere Be- und Entlüftungsöffnung
- 27: Gehäusewand
- 28: Platte

## Patentansprüche

1. Be- und Entlüftungsanlage mit regenerativer Wärmerückgewinnung, umfassend ein längliches, innere und äußere Be- und Entlüftungsöffnungen (4, 5) aufweisendes Gehäuse (3), in dem wechselweise angetriebene Ventilatoreinheiten (10, 11) zum Fördern von im wesentlichen axial das Gehäuse (3) in jeweils entgegengesetzten Richtungen unter Benutzung desselben Strömungsweges durchströmenden Luftströmen und eine von den erzeugten Luftströmen durchströmte Wärmespeichereinheit (6) zum Aufnehmen und Zwischenspeichem der Wärme des die Wärmespeichereinheit (6) in einer Richtung durchströmenden Luftstromes und zum Abgeben derselben auf den die Wärmespeichereinheit (6) in entgegengesetzter Richtung durchströmenden Luftstrom angeordnet sind, **dadurch gekennzeichnet, daß** jede Ventilatoreinheit (10, 11; 20, 21) aus einem Radialventilatorrad (12; 23, 24) und einem die Förderluft auf die Wärmespeichereinheit (6, 22) richtenden Fördergehäuse (13, 25) mit einem Austrittstutzen (16) besteht, bei welcher Ventilatoreinheit (10, 11; 20, 21) der radiale Abstand des Radialventilatorrades (12; 23, 24) zu seinem Fördergehäuse (13, 25) und die Öffnungsweite des Ausstrittsstutzens (16) dergestalt konzipiert sind, daß jede Ventilatoreinheit (10, 11; 20, 21) im nicht angetriebenen Zustand von dem von der anderen Ventilatoreinheit (11, 10; 21, 20) geförderten Luftstrom durchströmbar ist, so daß der Strömungsweg der Förderluft in seinen beiden Richtungen durch die Ventilatoreinheiten (10, 11; 20, 21) hindurch erfolgt, indem die Förderluft beim Betrieb der einen Ventilatoreinheit (10 bzw.11; 20 bzw. 21) durch diese aktiv gefördert und diese Ventilatoreinheit (10 bzw. 11; 20 bzw. 21) beim Betrieb der anderen Ventilatoreinheit (11 bzw. 10; 21 bzw. 20) von der in umgekehrter Richtung geförderten Luft durchströmt wird.

2. Be- und Entlüftungsanlage nach Anspruch 1, **dadurch gekennzeichnet, daß** an jedem ein- bzw. ausströmseitigen Ende der Wärmespeichereinheit (6) eine mit ihrer Förderluft die Wärmespeichereinheit (6) beaufschlagende Ventilatoreinheit (10, 11) angeordnet ist.

3. Be- und Entlüftungsanlage nach Anspruch 1, **dadurch gekennzeichnet, daß** die Ventilatoreinheiten (20, 21) benachbart zueinander an einem ein- bzw. ausströmseitigen Ende der Wärmespeichereinheit (22) angeordnet sind.

4. Be- und Entlüftungsanlage nach Anspruch 3, **dadurch gekennzeichnet, daß** die Ventilatoreinheiten (20, 21) in einem gemeinsamen Fördergehäuse (25) angeordnet sind.

5. Be- und Entlüftungsanlage nach Anspruch 2, **dadurch gekennzeichnet, daß** die Ventilatoreinheiten (10, 11) jeweils im Bereich der Endabschnitte des Gehäuses (3) angeordnet sind, so daß diese Gehäuseabschnitte das Fördergehäuse darstellen.

6. Be- und Entlüftungsanlage nach einem der Ansprüche 1 bis 5, **dadurch gekennzeichnet, daß** das Fördergehäuse (13, 25) eine geringere Breite als die Breite des Gehäuses (3) aufweist und ausströmseitig einen im wesentlichen der Höhe des Gehäuses (3) entsprechenden Austrittsstützen (16) aufweist.

7. Be- und Entlüftungsanlage nach einem der Ansprüche 1 bis 6, **dadurch gekennzeichnet, daß** der radiale Abstand (17) zwischen einem Radialventilatorrad (12; 23, 24) und dem Fördergehäuse (13, 25) etwa dem 0,2-fachen bis 0,5-fachen des Durchmessers des Radialventilatorrades (12; 23, 24) entspricht.

8. Be- und Entlüftungsanlage nach einem der Ansprüche 1 bis 7, **dadurch gekennzeichnet, daß** die Wärmespeichereinheit (6, 22) aus einer oder mehreren jeweils aus einzelnen Wärmespeicherelementen aufgebauten Wärmespeicherpaketen (7) besteht.

9. Be- und Entlüftungsanlage nach Anspruch 8, **dadurch gekennzeichnet, daß** als Wärmespeicherelemente Wärmespeicherplatten vorgesehen sind.

## Claims

1. Exhaust and ventilation system with regenerative heat recovery, said system including an elongate housing (3), which has inner and outer air inlet and exhaust apertures (4, 5), in which housing alternately driven ventilator units (10, 11) are disposed for conveying air streams, which flow substantially axially through the housing (3) in opposite directions using the same flow path, and a heat storage unit (6), which is traversed by the air streams produced, for the absorption and intermediate storage of the heat of the air stream flowing through the heat storage unit (6) in one direction, and for the dissipation of said heat to the air stream flowing through the heat storage unit (6) in the opposite direction, **characterised in that** each ventilator unit (10, 11; 20, 21) comprises a radial impeller (12; 23, 24) and a housing (13, 25), which directs the air to be conveyed to the heat storage unit (6, 22) and has an outlet pipe connection (16), for which ventilator unit (10, 11; 20, 21) the radial spacing between the radial impeller (12; 23, 24) and its housing (13, 25) and the width of opening of the outlet pipe connection (16) are arranged in such a manner that each ventilator unit (10, 11; 20, 21) in the non-driven state is traversable by the air stream conveyed from the other ventilator unit (11, 10; 21, 20), so that the flow path of the air to be conveyed occurs in its two directions through the ventilator units (10, 11; 20, 21), **in that** the air to be conveyed is conveyed actively through one ventilator unit (10 or 11; 20 or 21) during the operation of said unit, and this ventilator unit (10 or 11; 20 or 21) is traversed by the air, conveyed in the opposite direction, during the operation of the other ventilator unit (11 or 10; 21 or 20).

2. Exhaust and ventilation system according to claim 1, **characterised in that** a ventilator unit (10, 11), which acts on the heat storage unit (6) with its air to be conveyed, is disposed at each inlet or outlet end of the heat storage unit (6).

3. Exhaust and ventilation system according to claim 1, **characterised in that** the ventilator units (20, 21) are disposed adjacent each other at an inlet or outlet end respectively of the heat storage unit (22).

4. Exhaust and ventilation system according to claim 3, **characterised in that** the ventilator units (20, 21) are disposed in a common housing (25).

5. Exhaust and ventilation system according to claim 2, **characterised in that** the ventilator units (10, 11) are each disposed in the region of the end portions of the housing (3), so that said housing portions represent the housing.

6. Exhaust and ventilation system according to one of claims 1 to 5, **characterised in that** the housing (13, 25) has a smaller width than the width of the housing (3) and has an outlet pipe connection (16) corresponding substantially to the height of the housing (3) at the outlet end.

7. Exhaust and ventilation system according to one of claims 1 to 6, **characterised in that** the radial spacing (17) between a radial impeller (12; 23, 24) and the housing (13, 25) corresponds roughly to 0.2-times to 0.5-times the diameter of the radial impeller (12; 23, 24).

8. Exhaust and ventilation system according to one of claims 1 to 7, **characterised in that** the heat storage unit (6, 22) comprises one or more groups (7) of heat storage units which are each constructed from individual heat storage elements.

9. Exhaust and ventilation system according to claim 8, **characterised in that** heat storage panels are provided as the heat storage elements.

## Revendications

1. Dispositif d'amenée et d'évacuation d'air avec récupération de chaleur régénérable comportant un logement (3) oblong présentant des ouvertures intérieures et extérieures d'amenée et d'évacuation d'air (4, 5), dans lequel sont disposées des unités de ventilation (10, 11) entraînées alternativement qui transportent des flux d'air qui traversent le logement (3) de manière essentiellement axiale, dans des directions opposées, tout en utilisant la même voie de circulation, et une unité d'accumulation thermique (6) traversée par les flux d'air générés qui accumule et stocke temporairement la chaleur du flux d'air traversant dans un sens l'unité d'accumulation thermique (6) et qui restitue celle-ci dans le flux d'air traversant l'unité d'accumulation thermique (6) dans le sens opposé **caractérisé en ce que** chaque unité de ventilation (10, 11; 20, 21) soit constituée d'une hélice de ventilateur radial (12; 23, 24) et d'une volute (13, 25) munie d'une tubulure de sortie (16) et dirigeant l'air transporté vers une unité d'accumulation thermique (6, 22), pour laquelle unité de ventilation (10, 11; 20, 21) l'intervalle radial entre l'hélice du ventilateur radial (12; 23, 24) et la volute (13, 25) de même que la largeur d'ouverture de la tubulure de sortie (16) sont conçus de telle manière que chaque unité de ventilation (10, 11; 20, 21) puisse être traversée, lorsqu'elle n'est pas entraînée, par le flux d'air généré par l'autre unité de ventilation (11, 10; 21, 20), de sorte que la voie de circulation de l'air transporté passe dans les deux sens par les unités de ventilation (10, 11; 20, 21), sachant que l'air transporté lors du fonctionnement d'une unité de ventilation (10 ou 11; 20 ou 21) est activement transporté par celle-ci et que cette unité de ventilation (10 ou 11; 20 ou 21) est traversée, lors du fonctionnement de l'autre unité de ventilation (11 ou 10; 21 ou 20) par de l'air transporté dans le sens inverse.

2. Dispositif d'amenée et d'évacuation d'air selon la revendication 1, **caractérisé par le fait qu'**à chaque extrémité d'amenée ou d'évacuation d'air de l'unité d'accumulation thermique (6) soit disposée une unité de ventilation (10, 11) qui dirige l'air en circulation sur l'unité d'accumulation thermique (6).

3. Dispositif d'amenée et d'évacuation d'air selon la revendication 1, **caractérisé en ce que** les unités de ventilation (20, 21) soient placées l'une à côté de l'autre, contre le côté d'amenée ou d'évacuation de l'unité d'accumulation thermique (22).

4. Dispositif d'amenée et d'évacuation d'air selon la revendication 3, **caractérisé en ce que** les unités de ventilation (20, 21) soient disposées dans une volute commune (25).

5. Dispositif d'amenée et d'évacuation d'air selon la revendication 2, **caractérisé en ce que** les unités de ventilation (10, 11) soient disposées dans la zone d'extrémité d'un logement (3), de sorte que ces sections de logement constituent la volute.

6. Dispositif d'amenée et d'évacuation d'air selon l'une des revendications 1 à 5, **caractérisé en ce que** la volute (13, 25) soit moins large que le logement (3) et qu'elle présente, côté évacuation, une tubulure de sortie (16) dont la hauteur correspond quasiment à la hauteur du logement (3).

7. Dispositif d'amenée et d'évacuation d'air selon l'une des revendications 1 à 6, **caractérisé en ce que** l'intervalle radial (17) entre l'hélice (12; 23, 24) du ventilateur radial et la volute (13, 25) corresponde à 0,2 à 0,5 fois le diamètre de l'hélice (12; 23, 24) du ventilateur radial.

8. Dispositif d'amenée et d'évacuation d'air selon l'une des revendications 1 à 7, **caractérisé en ce que** l'unité d'accumulation thermique (6, 22) soit constituée d'un ou de plusieurs blocs d'accumulation thermique (7) conçus à partir d'éléments d'accumulation thermique.

9. Dispositif d'amenée et d'évacuation d'air selon la revendication 8, **caractérisé en ce que** des plaques d'accumulation thermique soient prévues en guise d'éléments d'accumulation thermique.
